## Europäisches Patentamt
## European Patent Office
## Office européen des brevets

(19)

(11) Veröffentlichungsnummer: **0 100 090**
**B1**

(12)

# EUROPÄISCHE PATENTSCHRIFT

(45) Veröffentlichungstag der Patentschrift:
**14.10.87**

(51) Int. Cl.⁴: **F 16 L 37/28**, F 16 L 37/22

(21) Anmeldenummer: **83107333.3**

(22) Anmeldetag: **26.07.83**

(54) **Druckluftkupplung.**

(30) Priorität: **27.07.82 SE 8204473**

(43) Veröffentlichungstag der Anmeldung:
**08.02.84 Patentblatt 84/6**

(45) Bekanntmachung des Hinweises auf die Patenterteilung:
**14.10.87 Patentblatt 87/42**

(84) Benannte Vertragsstaaten:
**BE CH DE FR GB LI NL**

(56) Entgegenhaltungen:
**WO-A-80/01711**
**DE-A-2 558 650**
**GB-A-2 099 946**

(73) Patentinhaber: **Nyberg, Ove, Box 245, S-541 01 Skövde (SE)**

(72) Erfinder: **Moberg, Lennart, Box 94060, S-541 01 Skövde (SE)**

(74) Vertreter: **Patentanwälte Dr. Ing. Eugen Maier Dr. Ing. Eckhard Wolf, Pischekstrasse 19, D-7000 Stuttgart 1 (DE)**

LIBER, STOCKHOLM 1987

EP 0 100 090 B1

**Beschreibung**

Die Erfindung betrifft eine Druckluftkupplung der im Oberbegriff des Hauptanspruchs angegebenen Gattung.

Übliche Schnellkupplungen für Druckluftleitungen können normalerweise für Druckluftleitungen mit einem Schlauchdurchmesser größer als 1/2" nicht verwendet werden, da bei bislang bekannten Schnellkupplungen dieser Art der Nippel beim Trennen der Kupplung einen mehr oder weniger großen Rückstoß erfährt und ein solcher Rückstoß insbesondere bei großen Kupplungen gefährliche Auswirkungen haben kann.

Der Erfindung liegt daher die Aufgabe zugrunde, eine Schnellkupplung der vorgenannten Art so auszubilden, daß der Nippel beim Trennen der Kupplung nicht eher aus der Muffe herausgezogen werden kann, als bis die Luftverbindung unterbrochen wurde und der Luftdruck in dem Nippel so weit abgesunken ist, daß der Nippel nach vollständiger Trennung von der Muffe nicht zurückgeschleudert wird.

Der Erfindung liegt die weitere Aufgabe zugrunde, eine Schnellkupplung der vorgenannten Art so weiterzubilden, daß auf den Nippel nur verhältnismäßig geringe Kräfte ausgeübt werden müssen, auch wenn in der Muffenleitung ein verhältnismäßig großer Gegendruck herrscht.

Diese Aufgabe wird gemäß der Erfindung dadurch gelöst, daß die Kupplung die im Kennzeichen des Anspruchs 1 angegebenen Merkmale aufweist. Vorteilhafte Weiterentwicklungen ergeben sich aus den beiden Unteransprüchen.

Eine solche Aufgabe löst auch die Kupplung nach der WO-Al- 80/01711 durch eine andere Konstruktion. Die Erfindung ist insbesondere gegenüber dieser Kupplung abgegrenzt, indem die mit dem Nippel verriegelbare Ventilhülse in dem Muffenteil verschiebbar ist. Auch ist die Konstruktion des Ventils bei der erfindungsgemäßen Druckluftkupplung eine unterschiedliche.

Beim Gebrauch der erfindungsgemäßen Kupplung wird der Nippel in zwei Schritten in die Muffe eingeführt. Beim ersten Schritt erreicht der Nippel eine Zwischenstellung, in der er mit der Ventilhülse verriegelt wird. Beim zweiten Schritt wird der Nippel zusammen mit der Ventilhülse weiter in die Muffe bis zu einer inneren Endstellung eingeführt, in der die Muffenleitung geöffnet und eine Verbindung des Muffeninneren mit dem Nippelinneren hergestellt wird. Auch das Trennen der Kupplung erfolgt in zwei Schritten. Beim ersten Schritt der Verschiebung des Nippels und der Ventilhülse in die Zwischenstellung wird die Luftverbindung unterbrochen und eine vom Nippel in die Außenatmosphäre führende Druckentlastungsleitung geöffnet, wobei der Druck im Nippel und in dem an diesem angeschlossenen Schlauch nahezu auf Atmosphärendruck absinkt. Erst dann kann der Nippel in einem zweiten Schritt aus der Muffe herausgezogen und somit die Gefahr eines Rückstoßes vermieden werden.

Aufgrund der speziellen Ausbildung der Kupplung sind die beim Kuppeln und Entkuppeln aufzuwendenden Kräfte im wesentlichen unabhängig von der Höhe des in der Druckluftleitung herrschenden Druckes und in erster Linie durch die Rückstellkraft einer verhältnismäßig weichen Druckfeder und den Reibungswiderstand der Dichtungen bestimmt.

Diese und andere die Erfindung kennzeichnenden Merkmale und mit dem Gegenstand der Erfindung erzielbaren Vorteile werden ausführlicher in der nachfolgenden Beschreibung eines in den Zeichnungen dargestellten Ausführungsbeispiels der erfindungsgemäßen Kupplung erläutert. Es zeigen

Fig. 1 einen Längsschnitt durch die Muffe der Kupplung und den Nippel in einer äußeren Endstellung,

Fig. 2 einen Längsschnitt durch die Kupplung, in der sich der Nippel und die Ventilhülse in einer vollkommen gekuppelten inneren Endstellung befinden,

Fig. 3 einen Längsschnitt durch die Kupplung, in der sich der Nippel und die Ventilhülse in einer Zwischenstellung befinden,

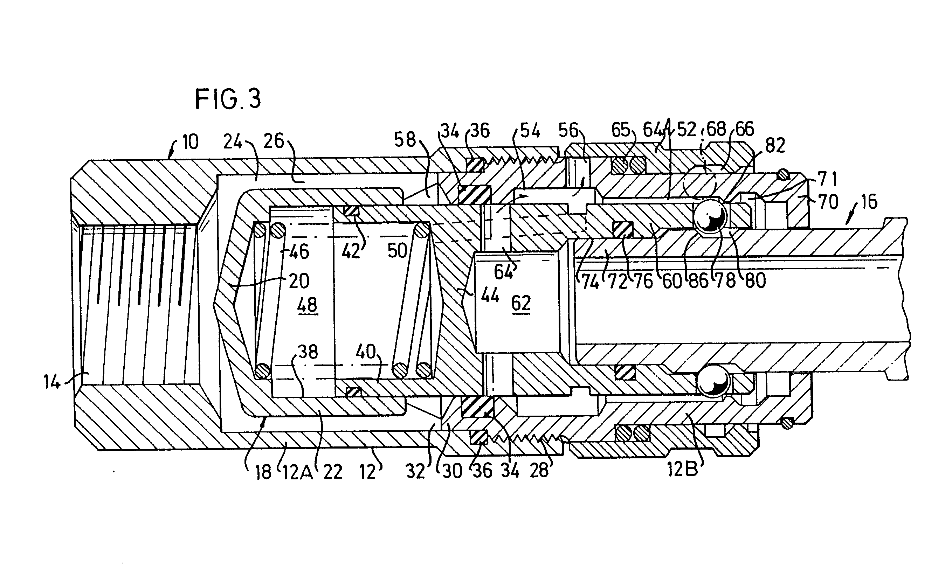

Fig. 3-6 verschiedene Stellungen des Kugelgesperres der Ventilhülse in größerem Maßstab.

Die Muffe 10 der Kupplung besteht aus einer äußeren Hülse, die zwei ineinander geschraubte hülsenförmige Muffenteile 12A und 12B aufweist. Der Muffenteil 12A weist einen Verbindungsstutzen 14 zum Anschluß einer Druckluftleitung auf, die mit einer an den Nippel 16 angeschlossenen Leitung verbunden werden soll.

In den Muffenteil 12A ist ein zylindrischer Becher 18 eingesetzt, dessen Boden 20 sich in Richtung auf den Anschlußstutzen 14 erstreckt. An der äußeren Wandfläche 22 des Bechers sind in axialer Richtung sich erstreckende, Gleitrippen bildende Flansche 24 angeordnet, die den Becher 18 in dem Muffenteil 12A zentrieren und axiale Luftkanäle 26 zwischen dem Becher 18 und dem Muffenteil 12A bilden.

In axialer Richtung wird der Becher 18 dadurch gehalten, daß die Stirnfläche 30 des in den Muffenteil 12A eingeschraubten Muffenteils 12B gegen die nippelseitigen Enden 32 der Flansche 24 anliegen.

An dem inneren Ende des Muffenteils 12B ist in einer Ringnut der Innenwand eine Dichtung in Gestalt eines elastischen Dichtringes oder zweier solcher Dichtringe angeordnet. Am äußeren Umfang des Muffenteils 12B ist zu dessen Abdichtung gegenüber dem Muffenteil 12A ein Dichtring 36 vorgesehen.

Gegen die Innenwandung 38 des Bechers 18 liegt das innere Ende einer Ventilhülse 40 axial verschiebbar an, die gegenüber der Innenwand des Bechers 18 mittels eines Dichtrings 42 abgedichtet ist.

Die Ventilhülse 40 weist eine Zwischenwand 44 auf. Zwischen dieser Zwischenwand und dem Boden 20 des Bechers 18 ist eine Schraubenfeder 46 eingespannt.

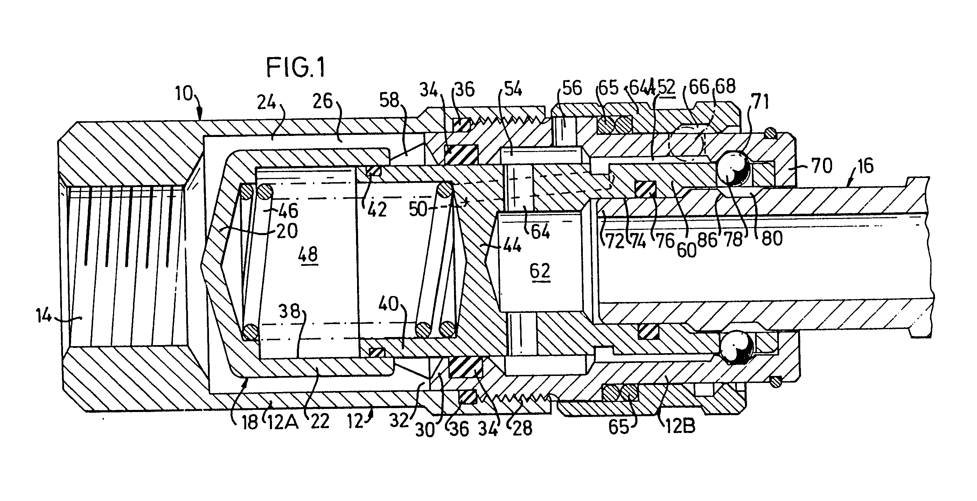

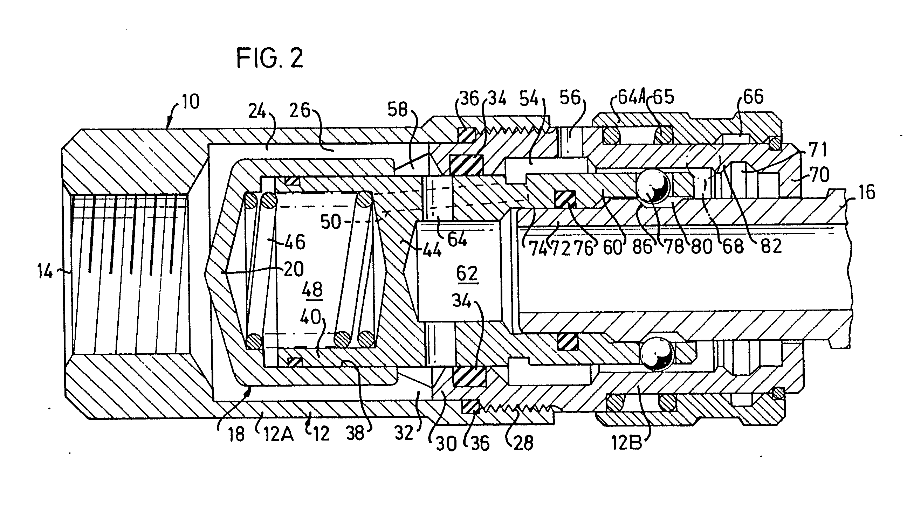

Die zwischen dem Boden 20 und der Zwischenwand 44 eingeschlossene Kammer 48 hat ein variables Volumen, da die Ventilhülse 40 von ihrer in Fig. 1 dargestellten äußeren Endstellung in die in Fig. 2 dargestellte innere Endstellung verschoben werden kann. Dieser Kammer 48 ist jedoch dauernd über einen in eine Außendrehung 52 mündenden Kanal 50 mit der Außenatmosphäre verbunden, wobei diese Außendrehung 52 ihrerseits mit einer inneren Ausdrehung 54 in dem Muffenteil 12B in Verbindung steht. Eine die Wandung des Muffenteils 12B durchsetzende Bohrung 56 oder deren mehrere verbinden diese Ausdrehung 54 mit der Außenatmosphäre.

Die unter Druck stehende Luft der an den Stutzen 14 angeschlossenen Leitung dringt in den Bereich der durch die Dichtungen 42 und 34 begrenzten Verbindungsleitung 58 ein.

Der Radius der gegen die Innenwandung des Bechers 18 anliegenden Dichtung 42 ist gleich dem Radius der Dichtfläche der gegen die Außenwandung der Ventilhülse 40 anliegenden Dichtung 34, was dazu führt, daß die von der in der Verbindungsleitung 58 eingeschlossenen Druckluft ausgeübten Kräfte sich gegenseitig vollkommen aufheben. Auf diese Weise ist die Ventilhülse 40 praktisch keinen von der Druckluft ausgeübten, in axialer Richtung wirkenden Kräften unterworfen. Um den Nippel 16 und damit die Ventilhülse 40 von der äußeren, in Fig. 1 dargestellten Endstellung in die in Fig. 2 dargestellte innere Endstellung zu überführen, muß nur die verhältnismäßig schwache, von der Feder 46 ausgeübte Rückstellkraft und die Reibungskraft der Dichtungen 42 und 34 überwunden werden. Diese praktisch vernachlässigbare Einrückkraft ermöglicht ein rasches und leichtes Kuppeln.

Auf der gegenüberliegenden Seite der Zwischenwand 44 weist die Ventilhülse 40 einen Teil 60 mit zylindrischem äußerem Umfang auf. Innerhalb dieses Teils befindet sich eine Bodenkammer 62, die in der äußeren, in Fig. 1 dargestellten Endstellung der Ventilhülse 40 über durch radiale Bohrungen gebildete Leitungen 64 zur Druckentlastung des Nippels mit der Ausdrehung 54 in Verbindung steht. In der inneren, in Fig. 2 dargestellten Endstellung der Ventilhülse 40 stehen die in der Ventilhülse 40 vorgesehenen Leitungen 64 in Verbindung mit der Verbindungsleitung 58 und stellen so eine Verbindung zwischen der Verbindungsleitung 58 und dem Nippel 16 her.

Am Außenumfang des Muffenteils 12B kann eine Verriegelungsmanschette 64A entgegen der Rückstellkraft der Druckfeder 65 von ihrer äußeren Endstellung gemäß Fig. 2 in ihre innere Endstellung gemäß Fig. 1 verschoben werden.

Diese Verriegelungsmanschette hat eine innere Ausdrehung 66, in die die Kugeln 68 eines Kugelgesperres einrasten, die in Aussparungen des Muffenteils 12B angeordnet sind. In den Fig. 1 bis 3 sind diese Kugeln 68 und die sie aufnehmenden Aussparungen in gestrichelten Linien eingezeichnet, da sie nicht in der in diesen Figuren gezeichneten Schnittebene liegen.

In Fig. 2 ist das Kugelgesperre in der Verriegelungsstellung gezeigt, in der die Kugeln 68 Anschläge für die Stirnfläche der Ventilhülse 40 bilden, so daß diese in ihrer inneren Endstellung gehalten wird. In Fig. 1 sind die Kugeln 68 in einer Lage gezeichnet, in der sie, nachdem sie von der Ventilhülse 40 radial nach außen gedrängt wurden, in die Ausdrehung 66 einragen, so daß die Ventilhülse 40 in ihre äußere Endstellung gelangen kann, in der sie mit ihrer Stirnfläche gegen eine nach innen weisende Ringschulter 70 am Ende des Muffenteils 12B anliegt.

Der Nippel 16 hat ein zylindrisches inneres Ende 72, das, wenn es vollständig in den Teil 60 der Ventilhülse 40 eingeführt wurde, von der Innenwandung 74 der Ventilhülse 40 geführt wird und dieser gegenüber mittels der Dichtung 76 abgedichtet ist. Der Nippel 16 ist in der in den Fig. 2 und 3 dargestellten eingerückten Stellung mittels der Kugeln 78 eines zweiten Kugelgesperres verriegelt, das in einem Kranz von Bohrungen am äußeren Ende des Teils 60 der Ventilhülse 40 angeordnet ist.

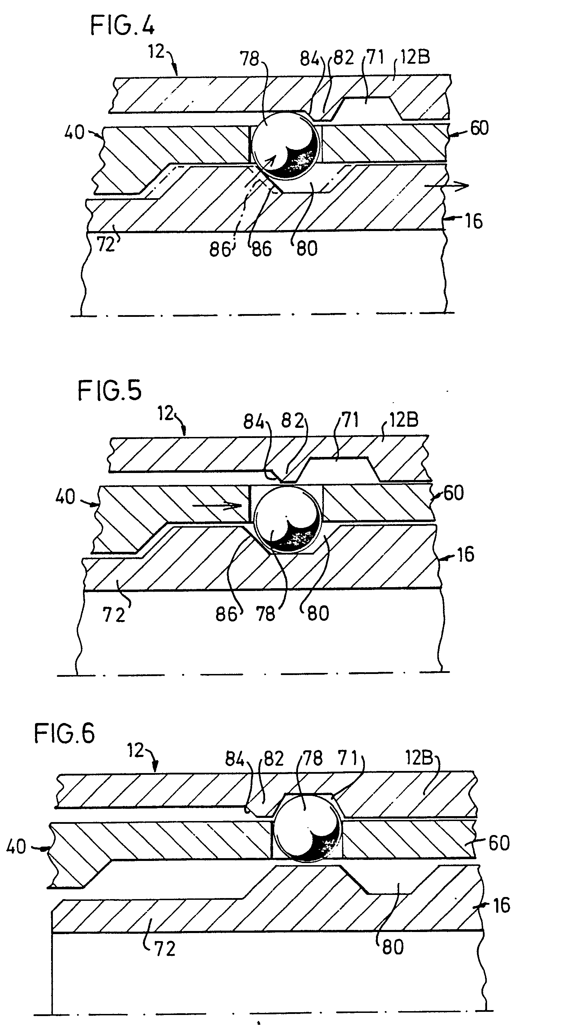

In der in den Fig. 2 und 4 dargestellten Verriegelungsstellung liegen die Kugeln 78 gegen eine schräge Flanke 86 einer am Außenumfang des Nippels 16 vorgesehenen Ringnut 80 an, wobei die Kugeln 78 dadurch in der Verriegelungsstellung gehalten werden, daß sie gegen die Innenwandung des Muffenteils 12B anliegen.

Die Ventilhülse 40 ist, wie dies in Fig. 2 dargestellt ist, mittels der gegen ihre äußere Stirnseitenfläche anliegenden Kugeln 68 verriegelt; diese Verriegelung wird jedoch aufgehoben, wenn die Verriegelungsmanschette 64A entgegen der Wirkung der Feder 65 in die in Fig. 1 dargestellte Lage zurückgeschoben wird, so daß der Nippel 16 zusammen mit der Ventilhülse 40 aus der Muffe 10 zurückgezogen werden kann, bis die Kugeln 78 auf die schräge Flanke 84 der Innenschulter 82 des Muffenteils 12B auftreffen. Wenn in dem Nippel 16 kein Überdruck mehr herrscht, übt die Feder 46 allein auf die Kugeln 74 eine Kraft aus, so daß diese an der schrägen Flanke 84 der Schulter 82 entlang nach innen in die Aussparungen der Ventilhülse 40 gleiten und somit, wie in Fig. 5 dargestellt, unter der Schulter 82 an dieser vorbeigeführt werden können und damit die Ventilhülse 40 und der Nippel 16 ihre äußere, in Fig. 1 dargestellte Endstellung erreichen, in der der Nippel 16 frei herausgezogen werden kann, wie dies in Fig. 6 dargestellt ist.

Wenn andererseits in dem Nippel noch ein Restdruck herrscht, wenn die Kugeln 78 auf die schräge Flanke 84 auftreffen, so wird der Nippel 16 vom Luftdruck in Richtung seiner Trennung von der Muffe 10 gepresst, so daß die schräge Flanke 86 der Ringnut 80 die Kugeln 78 so stark gegen die schräge Flanke 84 der Schulter 82 presst, daß die Feder 46 diese Kraft nicht überwindet. Dies hat zur Folge, daß der Nippel 16 in der in den Fig. 3 und 4 dargestellten Stellung so lange nicht bewegt werden kann, bis über die Bohrungen 64 eine Druckentlastung erfolgt und der Druck im Nippel sich im wesentlichen auf den Atmosphärendruck abgesenkt hat. Erst darauf ist die Feder 46 in der Lage, die Kugeln 78 in die Endsperrstellung gemäß Fig. 5, also in die Ringnut 80 abzudrängen, so daß sie unter der Schulter 82 vorbeibewegt werden können. Darauf können die Kugeln 78 wieder radial nach außen in die Ringnut 71 abgedrängt werden und die in Fig. 6 dargestellte Entsperrstellung einnehmen, so daß der Nippel 16 ohne die Gefahr eines Rückstoßes aus der Muffe 10 herausgezogen werden kann. Hierbei wird der Nippel 16 und die mit ihm verbundene Bohrung über die Leitungen 64, die Ausdrehung 54 und die Bohrungen 56 druckentlastet, wie dies in den Fig. 3 und 1 dargestellt ist.

Aufgrund der einfachen, die Schulter 82 aufweisenden Ausbildung der Muffe ist eine vollkommene Sicherheit gewährleistet. Der Nippel 16 kann von der Muffe 10 nicht eher getrennt werden, als der in ihm herrschende Druck im wesentlichen auf den Atmosphärendruck abgesunken ist. Auf diese Weise ist die Gefahr, daß der Nippel aufgrund des in ihm herrschenden Restdruckes beim Lösen der Kupplung weggeschleudert wird, vermieden.

**Patentansprüche**

1. Druckluftkupplung mit einer Muffe (10), einer in dieser verschiebbaren und mittels eines in der Muffe (10) angeordneten Kugelgesperres (68, 78) verriegelbaren Ventilhülse (40) und einem in die Ventilhülse (40) eingreifenden und in dieser mittels eines Kugelgesperres (78) verriegelbaren Nippel (16), wobei die Ventilhülse (40) in ihrer äußeren Endstellung die zwischen der Muffe (10) und dem in diese eingeführten Nippel (16) bestehende Verbindungsleitung absperrt, während die Ventilhülse (40), nachdem sie mittels des Nippels (16) entgegen der Wirkung einer Druckfeder (46) in ihre innere Endstellung verschoben wurde, diese Verbindungsleitung öffnet, dadurch gekennzeichnet, daß
- die Ventilhülse (40) zusammen mit dem Nippel (16) von ihrer inneren, die Druckluftleitung (58, 64) sperrenden Endstellung (Fig. 2) in eine Zwischenstellung (Fig. 3) verschiebbar ist, in der der Hohlraum (62) des mit der Verbindungshülse (40) verriegelten Nippels (16) über Leitungen (64, 54, 56) mit der freien Atmosphäre verbunden ist,
- daß die Zwischenstellung durch eine in der Muffe (10) angeordnete Schulter (82) festgelegt ist, die mit dem Kugelgesperre (78) der Ventilhülse (40) zu gleicher Zeit zusammenwirkt, in der das Kugelgesperre (78) den Nippel (16) mit der Ventilhülse (40) verriegelt,
- daß die Verriegelung des Kugelgesperres (78), in der dessen Kugeln gegen die schräge Flanke (84) der Schulter (82) anliegen, von dem auf den Nippel (16) wirkenden Druck der im Nippel verbliebenen Luft abhängt und so ausgebildet ist, daß sie aufgehoben wird, wenn ein nahezu vollständiger Druckausgleich mit der Atmosphäre stattgefunden hat, worauf die auf die Ventilhülse (40) wirkende Druckfeder (46) die Ventilhülse (40) zusammen mit dem Nippel (16) in die äußere Endstellung (Fig. 1) der Ventilhülse (40) verschiebt, in der die Kugeln des Gesperres (78) der Ventilhülse (40) sich in eine Ringnut (71) des Muffenteils verlagern und der druckentlastete Nippel (16) aus der Muffe (10) herausgezogen werden kann.

2. Druckluftkupplung nach Anspruch 1, dadurch gekennzeichnet,
- daß die Kugeln des Gesperres (78) der Ventilhülse (40) während der Verschiebung der Ventilhülse von ihrer Endstellung (Fig. 2) in die Zwischenstellung sich im Kontakt mit einer zylindrischen Innenwandung des Muffenteils (12B) befinden und zu einem Teil ihres Umfangs von einer am Umfang des Nippels (16) ausgesparten Ringnut (80) aufgenommen werden,
- daß die Kugeln des Gesperres (78) in der Zwischenstellung der Ventilhülse (40) sich unter dem Einfluß der von der Druckluft auf den Nippel (16) ausgeübten Kräfte in Kontakt mit einer schrägen Flanke (84) der Schulter (82) gehalten werden, wobei die über eine schrägen Flanke (86) der Ringnut (80) auf die Kugeln des Gesperres (78) einwirkende Kräfte diese in Kontakt mit der Schulter (82) halten, und
- daß beim Nachlassen der auf den Nippel (16) wirkenden Kräfte die Druckfeder (46) über die Ventilhülse (40) auf die Kugeln des Gesperres (78) eine Kraft ausübt, so daß sie längs der schrägen Flanke (84) der Schulter (82) gleitend in eine Lage in der Ringnut (80) des Nippels (16) gelangen, in der sie mit der Schulter (82) keine Berührung haben, so daß der Nippel (16) aus der Muffe (10) herausgezogen werden kann.

3. Druckluftkupplung nach Anspruch 1, dadurch gekennzeichnet,
- daß die Ventilhülse (40) eine Zwischenwand (44) aufweist und mit ihrem inneren Ende dicht in einem starr mit der Muffe (10) verbundenen Zylinder (22) geführt ist, der an seinem inneren Ende einen Boden (20) aufweist und eine Kammer (48) von variablem Volumen bildet, die über eine Leitung (50) in dauernder Verbindung mit der Atmosphäre steht,
- daß die Druckfeder (46) zwischen dem Boden (20) des Zylinders (22) und der Zwischenwand (44) der Ventilhülse (40) eingespannt ist,
- daß die Ventilhülse (40) mit ihrem Außenumfang gegen einen in einer Ringnut des Muffenteils (12B) angeordneten Dichtring (34) anliegt, dessen Dichtfläche denselben Radius wie die Dichtfläche des am Umfang der Ventilhülse (40) angeordneten, gegen die Innenwand (38) des Zylinders (22) anliegenden Dichtrings (42) aufweist,

- daß die beiden Dichtringe (42, 34) einen Ringraum (58) begrenzen, der über den Ringkanal (26) am Außenumfang des Zylinders (22) mit dem den Drucklufteinlaß bildenden Ende (14) der Muffe (10) verbunden ist und der in der äußeren Endstellung der Ventilhülse (40) verschlossen ist, während er in der inneren Endstellung der Ventilhülse (40) über die durch deren radiale Bohrungen gebildete Leitung (64) mit der Kammer (62) der Ventilhülse (40) verbunden ist, die außerhalb der Zwischenwand (44) gelegen und mit dem Nippel (16) verbunden ist, und

- daß die Leitung (64) in der Zwischenstellung und in der äußeren Endstellung der Ventilhülse (40) den Nippel (16) mit der freien Atmosphäre verbindet.

## Claims

1. Compressed air coupling comprising a socket, a valve sleeve (40) displaceable therein and lockable by means of a catch (68, 78) in the socket (10), and a nipple (16) insertable into the valve sleeve (40) and lockable by means of a ball catch (78) in the valve sleeve (40), said valve sleeve (40) being disposed in an outer end position to close off the passage of compressed air (58, 64) between the socket (10) and the nipple (16) inserted into the socket (10), while the valve sleeve (40), after being pressed in by means of the nipple (16) against the action of a compression spring (46) to an inner end position, is disposed to open said passage, characterized in

that

- the valve sleeve (40) together with the nipple (16) is displaceable from its inner end position (Fig. 2), while closing said passage (58, 64) to a predetermined intermediate position (Fig. 3), in which the hollow botton chamber (62) of the nipple (16) locked in the connecting valve sleeve (40) is in connection with the free atmosphere by passages (64, 65, 56),

- the intermediate position is determined by a shoulder (82) which is arranged in the socket (10) and interacts with the ball catch (78) of the valve sleeve (40) at the same time as the ball catch (78) locks the nipple (16) to the valve sleeve (40),

- the locking of the ball catch (78), the balls of which abut against the inclined side surface (84) on the shoulder (82), being dependent on the pulling force which the nipple (16) subjected to due to the remaining compressed air in the nipple (16), and being arranged to be released when said compressed air has been depressurized to approximately atmospheric pressure, whereafter the compression spring (46) acting on the valve sleeve (40) is free to displace the valve sleeve (40) and the nipple (16) to the outer end position (Fig. 1) of the valve sleeve (40), in which position the balls of the ball catch (78) of the valve sleeve (40) are free to move in an annular groove (71) of the socket (10) to make it possible to withdraw the depressurized nipple (16) out of the socket (10).

2. Coupling according to Claim 1, <u>characterized</u> in that the balls in the ball catch (78) of the valve sleeve (40) during the displacement of the valve sleeve (40) from its inner end position (Fig. 2) to the intermediate position, are in contact with an interior cylindrical surface of the socket (12B) and are kept in engagement with an annular groove (80) at the peripheral area of the nipple (16),

- that the balls in the ball catch (78) in the intermediate position of the valve sleeve (40) are in contact with an inclined side surface (84) on the shoulder (82) under die influence of compressed air forces acting on the nipple (16) which are transmitted via an inclined side surface (86) of the annular ball groove (80) of the nipple (16) to the balls to hold them in contact with the shoulder (82), and

- that when compressed air forces on the nipple (16) cease, the compression spring (46) will transmit, via the valve sleeve (40), a pressing force to the balls, so that they are guided by the inclined side surface (84) of the shoulder (82) to a radial inner bottom position in the annular ball groove (80) of the nipple (16), in which position the balls lie free of the shoulder (82) to make it possible to remove the nipple (16) out of the socket (10).

3. Coupling Spring according to Claim 1, <u>characterized</u> in that the valve sleeve (40) has an intermediate bottom (44) and is sealingly guided with its inner end portion inside a cylinder (22) which is fixed in the socket (10) and has a bottom (20) at its inner end to form a chamber (48) of variable volume, that the chamber (48) is constantly in communication with the free atmosphere through a conduit (50),

- that the compression spring (46) is tensioned between the bottom (20) of the cylinder (22) and the intermediate bottom (44) of the valve sleeve (40),

- that the valve sleeve (40) seals on its outside against a packing (34) in the socket (12B), the sealing surface of said packing lying at the same radius as the sealing surface of the valve sleeve packing (42) against the inside (38) of the cylinder (22),

- that the two packings (42, 34) delimit an annular space (58) which is in communication via the annular conduit (26) on the outside of the cylinder (22) with the connecting end of the socket (10) and which is closed off when the valve sleeve (40) is in its outer end position, while said annular space (58), when the valve sleeve (40) is in its inner end position, is in communication via a conduit (64) in the wall of the valve sleeve (40) with the valve sleeve chamber (62) which lies outside the intermediate wall (44) and which communicates with the nipple (16), and

- that said conduit (64), when the valve sleeve (40) is in its intermediate position and in its outer end position, connects the nipple (16) to the free atmosphere.

## Revendications

1. Accouplement à air comprimé comportant un manchon (10), une douille-valve (40) pouvant être déplacée dans ce dernier et être verrouillée à l'aide d'un dispositif de blocage à billes (68, 78) placé dans le manchon (10), et un embout (16) s'engageant dans la douille à soupape (40) et pouvant être verrouillé dans cette dernière à l'aide d'un dispositif de blocage à billes (78), la douille-valve (40) interrompant, dans sa position extrême extérieure, la communication entre le manchon (10) et l'embout (16) introduit dans ce dernier, tandis que la douille-valve (40) établit cette communication après avoir été déplacée à l'aide de l'embout (16) contre l'action d'un ressort de pression (46) dans sa position extrême intérieure, caractérisé en ce que:
- la douille-valve (40) peut être déplacée, conjointement avec le nipple (16), de sa position extrême intérieure (figure 2) dans laquelle elle interrompt la communication d'air comprimé (58, 64) dans une position intermédiaire (figure 3), dans laquelle l'espace intérieur (62) de l'embout (16) verrouillé avec la douille-valve (40) est relié par des conduits (64, 54, 56) avec l'atmosphère libre,
- la position intermédiaire est déterminée par un épaulement (82) qui est placé dans le manchon (10) et qui coopère avec le dispositif de blocage à billes (78) de la douille-valve (40) au même moment où le dispositif de blocage à billes (78) verrouille l'embout (16) avec la douille-valve (40),
- le verrouillage du dispositif de blocage à billes (78) pendant lequel ses billes s'appuient contre le flanc incliné (84) de l'épaulement (82), dépend de la pression de l'air resté dans l'embout et agissant sur le nipple (16) et est réalisé de telle sorte qu'il soit supprimé lorsqu'un équilibre de pression presque complet avec l'atmosphère s'est établi, après quoi le ressort de pression (46) agissant sur la douille-valve (40) déplace la douille-valve (40) avec l'embout (16) dans la position extrême extérieure (figure 1) de la douille-valve (40), dans laquelle les billes du dispositif de blocage (78) de la douille-valve (40) se placent dans une gorge annulaire (71) de la partie de manchon et l'embout (16) qui n'est plus soumis à pression peut être extrait du manchon (10).

2. Accouplement à air comprimé selon la revendication 1, caractérisé en ce que:
- les billes du dispositif de blocage (78) de la douille-valve (40) se trouvent, pendant le déplacement de la douille-valve de sa position extrême (figure 2) dans la position intermédiaire, en contract avec une paroi intérieure cylindrique de la partie de manchon (12B) et sont engagées par une partie de leur circonférence dans une gorge annulaire (80) ménagée sur le pourtour de l'embout (16),
- les billes du dispositif de blocage (78) sont maintenues, dans la position intermédiaire de la douille-valve (40) et sous l'action des forces exercées par l'air comprimé sur l'embout (16), en contact avec un flanc incliné (84) de l'épaulement (82), les forces agissant par l'intermédiaire d'un flanc incliné (86) de la gorge annulaire (80) sur les billes du dispositif de blocage (78) maintenant ces dernières en contact avec l'épaulement (82) et en ce que:
- lors du relâchement des forces agissant sur embout (16), le ressort de pression exerce par l'intermédiaire de la douille-valve (40) une force sur les billes du dispositif de blocage (78), de sort qu'elles parviennent, en glissant le long du flanc incliné (84) de l'épaulement (82), dans la gorge annulaire (80) de l'embout (16) dans une position dans laquelle elles ne touchent pas l'épaulement (82), de sorte que l'embout (16) peut être extrait du manchon (10).

3. Accouplement à air comprimé selon la revendication 1, caractérisé en ce que:
- la douille-valve (40) présente une paroi intermédiaire (44) et est introduite de façon étanche avec son extrémité intérieure dans un cylindre (22) qui est relié de manière rigide au manchon (10) et présente à son extrémité intérieure un fond (20) et une chambre (48) de volume variable qui est constamment en communication avec l'atmosphère par un conduit (50),
- le ressort de pression (46) est tendu entre le fond (20) du cylindre (22) et la paroi intermédiaire (44) de la douille-valve (40),
- la douille-valve (40) est appliquée par son pourtour extérieur contre un joint d'étanchéité (34) qui est placé dans une gorge annulaire de la partie de manchon (12B) et dont la surface d'étanchéité a le même rayon que la surface d'étanchéité du joint d'étanchéité (42) placé sur le pourtour de la douille-valve (40) et appliqué contre la paroi intérieure (38) du cylindre (22),
- les deux joints d'étanchéité (42, 34) délimitent un espace annulaire (58) qui est relié par l'intermédiaire du canal annulaire (26) sur le pourtour extérieur du cylindre (22) avec l'extrémité (14) du manchon (10) constituant l'entrée d'air comprimé et qui est fermé lorsque la douille-valve (40) est dans la position extrême extérieure, tandis que lorsque la douille-valve (40) est dans la position extrême intérieure, il est relié par l'intermédiaire du conduit (64) formé par des trous radiaux de la douille à la chambre (62) de la douille-valve (40), qui est placée à l'extérieur de la paroi intermédiaire (44) et communique avec l'embout (16), et en ce que:
- le conduit (64) fait communiquer l'embout (16) avec l'atmosphère libre lorsque la douille-valve (40) est dans la position intermédiaire ou dans la position extrême extérieure.

FIG.1

FIG. 2

0 100 090

FIG.3

FIG.4

FIG.5

FIG.6